# EUROPÄISCHE PATENTANMELDUNG

(11) **EP 1 106 996 A2**
(43) Veröffentlichungstag der Anmeldung: **13.06.2001**
(21) Anmeldenummer: 00126166.8
(22) Anmeldetag: 30.11.2000
(51) Int. Cl.: G01N 25/22

(54) **Sensor und Verfahren zur Ermittlung von Russkonzentrationen**

(30) Priorität: 10.12.1999 DE 19959871
(71) Anmelder: Heraeus Electro-Nite International N.V., 3530 Houthalen (BE)
(72) Erfinder: Schönauer, Ulrich, Prof. Dr., 76344 Eggenstein (DE)
(74) Vertreter: Kühn, Hans-Christian

(57) **Zusammenfassung**

Die Erfindung betrifft einen Sensor und dessen Verwendung zur Ermittlung von Ruß-Konzentrationen, desweiteren ein Verfahren zur Ermittlung einer Ruß-Konzentration in strömenden, Ruß-Partikel mitführenden Gasen, wobei mindestens ein Teilstrom eines Ruß-Partikel mitführenden Abgasstromes mindestens einen, mindestens in Strömungsrichtung offen-porösen Formkörper durchströmt und wobei die Temperatur des Formkörpers mit mindestens einem Temperaturfühler gemessen wird. Es ergibt sich das Problem, einen Sensor zur Ermittlung von Ruß-Konzentrationen in strömenden Gasen bereitzustellen, der die Nachteile der aus dem Stand der Technik bekannten Sensoren überwindet. Das Problem wird für den Sensor dadurch gelöst, daß der Sensor ein Rußsensor ist, der mindestens einen, mindestens in Strömungsrichtung offen-porösen Formkörper, mindestens ein elektrisches Heizelement und mindestens einen Temperaturfühler aufweist.

## Beschreibung

Die Erfindung betrifft einen Sensor und dessen Verwendung zur Ermittlung von Ruß-Konzentrationen, desweiteren ein Verfahren zur Ermittlung einer Ruß-Konzentration in strömenden, Ruß-Partikel mitführenden Gasen, wobei mindestens ein Teilstrom eines Ruß-Partikel mitführenden Abgasstromes mindestens einen, mindestens in Strömungsrichtung offen-porösen Formkörper durchströmt und wobei die Temperatur des Formkörpers mit mindestens einem Temperaturfühler gemessen wird.

DE 198 17 402 C1 beschreibt eine Sensoranordnung zur quantitativen Bestimmung von in einem Gasstrom enthaltenen elektrisch leitenden und/oder elektrisch geladenen Partikeln, insbesondere von Rußpartikeln. Dabei wird eine Elektrodenanordnung in einer den Gasstrom führenden Abgasleitung verwendet, die vom Abgas umströmt wird. An die Elektrodenanordnung wird mittels einer Leiteranordnung eine hohe Spannung im Bereich von 1000V bis 5000V angelegt. Das Meßprinzip beruht darauf, daß ein von der Elektrodenanordnung innerhalb der Abgasleitung erzeugtes elektrische Feld gestört wird, wenn elektrische leitende oder elektrisch geladene Partikel es durchströmen. Die Elektrodenanordnung bildet einen Kondensator, aus dem durch die Aufladung der Partikel elektrische Energie abgeführt wird. Bei konstanter Spannung muß zur Wiederherstellung der ursprünglichen Feldstärke ein Ladestrom fließen, der ein Maß für die Menge an Partikeln im Abgasstrom darstellt. Mindestens ein Abschnitt der Oberfläche der Leiteranordnung ist auf eine, die Partikel thermisch zerstörende Temperatur aufheizbar. Die Ausbildung einer einen Kurzschluß verursachenden geschlossenen Partikelschicht wird dadurch verhindert, daß Partikel, die auf die Leiteranordnung auftreffen, sofort verbrannt werden. Nachteilig bei dieser Sensoranordnung ist, daß hohe Spannungen benötigt werden.

Es ergibt sich das Problem, einen Sensor zur Ermittlung von Ruß-Konzentrationen in strömenden Gasen bereitzustellen, der die Nachteile der aus dem Stand der Technik bekannten Sensoren überwindet.

Das Problem wird für den Sensor dadurch gelöst, daß der Sensor ein Rußsensor ist, der mindestens einen, mindestens in Strömungsrichtung offen-porösen Formkörper, mindestens ein elektrisches Heizelement und mindestens einen Temperaturfühler aufweist. Unter einem mindestens in Strömungsrichtung offen-porösen Formkörper ist ganz allgemein ein Körper mit in Strömungsrichtung offener Porosität beziehungsweise durchgehenden Öffnungen oder Löchern zu verstehen, die geordnet oder ungeordnet vorliegen können. Dabei kann es sich um ein einfaches Lochblech, ein Röhrchen, ein Paket aus Fasern oder Wolle, eine poröse Keramik, ein poröses Glas, eine poröse dünne Schicht oder ähnliches handeln. Aber auch eine stark rauhe Oberfläche kann als in Strömungsrichtung offen-poröser Formkörper verwendet werden. Von Vorteil ist, wenn der mindestens in Strömungsrichtung offen-poröse Formkörper aus einer Keramik mit wabenförmigem Aufbau gebildet ist oder ein in Strömungsrichtung offen-poröser Formkörper mindestens teilweise mit einem katalytisch aktiven Material, beispielsweise mit Platin. belegt ist. Das elektrische Heizelement und der Temperaturfühler können direkt auf oder in dem Formkörper angeordnet sein. Das elektrische Heizelement, der Temperaturfühler und der Formkörper können aber auch auf einem Träger angeordnet sein.

Der Formkörper kann beispielsweise von einem kompletten Gasstrom, der Ruß-Partikel aufweist, durchströmt werden oder aber nur von einem Teil des Gasstromes durchströmt werden. Der Formkörper soll nicht 100% des Rußes aus dem Gas aufnehmen, also einen Rußfilter nicht ersetzen. Es ist sinnvoll, daß jeweils nur ein Bruchteil des Rußes von dem durchströmten Formkörper aus dem Gas aufgenommen wird und sozusagen eine repräsentative Teilmenge an Ruß-Partikeln aus dem Abgas entnommen wird.

Im Hinblick auf die vielfältigen Gestaltungsmöglichkeiten der Sensorgeometrie des Rußsensors ist darauf zu achten, daß leitfähige Verbindungen wie beispielsweise katalytisch aktives Material oder der Ruß selbst nicht zu Signalstörungen oder Kurzschlüssen führen, die einen einwandfreien Betrieb der Heizelemente sowie der Temperaturfühler gefährden können. Eventuell kann hierzu die Verwendung einer oder mehrerer elektrisch isolierender, Ruß-dichter Schichten zwischen Heizelement und Formkörper beziehungsweise zwischen Temperaturfühler und Formkörper erforderlich sein. Eine Kurzschlußbildung durch Ruß kann aber, insbesondere am elektrischen Heizelement, auch erwünscht sein beziehungsweise zu Auswertezwecken verwendet werden.

Der Sensor eignet sich insbesondere zur Ermittlung einer Ruß-Konzentration in strömenden, Ruß-Partikel mitführenden Gasen, die beispielsweise von Verbrennungsanlagen oder Verbrennungsmotoren ausgestoßen werden.

Das Problem wird für das Verfahren dadurch gelöst, daß ein Teil der Ruß-Partikel am Formkörper ( 4 ) haften bleibt und daß in definierten zeitlichen Abständen der Formkörper ( 4 ) mittels eines elektrischen Heizelementes ( 3; 3a; 3b ) auf die Zündtemperatur des Rußes aufgeheizt wird und daß eine bei Verbrennung von Ruß-Partikeln auftretende Wärmeentwicklung als ein direktes Maß für eine Menge an Ruß verwendet wird, die am Rußsensor vorbeigeströmt ist.

Dabei können die zeitlichen Abstände, in denen der Formkörper mit dem elektrischen Heizelement aufgeheizt wird, fest gewählt werden. Aber auch variable zeitliche Abstände, die aufgrund einer Auswertung von Betriebsdaten gewählt werden können, können sinnvoll sein.

Für einen Rußsensor in der Abgasführung eines Dieselmotors könnte das beispielsweise bedeuten, daß die Aufheizung des Formkörpers nach einer vorbestimmten Anzahl an Kaltstarts oder in Abhängigkeit vom verbrauchten Dieselkraftstoff gestartet wird. Unter Betriebsdaten sind demnach allgemein Informationen zu verstehen, die die Erzeugung des Abgases betreffen und in irgendeinen Zusammenhang mit einer Rußentwicklung im Abgas gesetzt werden können.

Zum einen ist es möglich, daß nach Erreichen der Zündtemperatur des Rußes am Formkörper ( 4) das elektrische Heizelement ( 3; 3a; 3b ) mit einer gleichbleibenden Heizleistung betrieben wird, daß die durch die Verbrennung von Ruß-Partikeln auftretende Wärmeentwicklung mit dem Temperaturfühler ( 2; 2a; 2b ) gemessen wird, daß der Temperaturanstieg als direktes Maß für die verbrannte Menge an Ruß-Partikeln am Formkörper ( 4 ) ausgewertet wird und daß daraus die Menge an Ruß bestimmt wird, die am Rußsensor vorbeigeströmt ist.

Dazu ist eine intelligente Steuerung notwendig, die den Temperaturanstieg über eine vorgegebene Rechenroutine in eine Rußmenge umrechnen kann. Die Rußmenge, die am Formkörper verbrennt, ist proportional der Rußmenge, die seit dem Einbau oder dem letzten Aufheizen des Formkörpers am Formkörper vorbeigeströmt ist.

Zum anderen kann nach Erreichen der Zündtemperatur des Rußes am Formkörper ( 4 ) die Temperatur des Formkörpers ( 4 ) mittels Zurücknahme der Heizleistung des elektrischen Heizelementes ( 3; 3a; 3b ) weitgehend isotherm gehalten werden und die Heizleistung als direktes Maß für die verbrannte Menge an Ruß-Partikeln am Formkörper ( 4 ) ausgewertet werden und daraus die Menge an Ruß bestimmt werden, die am Rußsensor vorbeigeströmt ist. Auch hier ist eine intelligente Steuerung erforderlich.

Nach Auswertung des Temperaturanstieges oder der Heizleistungsänderung und Umrechnung in eine verbrannte Menge an Ruß am Formkörper vor dem Rußfilter wird auf die Menge an Ruß geschlossen, die am Rußsensor vorbeigeströmt ist. Dazu muß in der intelligenten Steuerung ein Korrelations-Schema, das den Zusammenhang zwischen Ablagerungen am Formkörper und der vorbeigeströmten Menge Ruß enthält, hinterlegt sein. Ist eine Rußmenge am Formkörper errechnet worden, die über einem, beispielsweise gesetzlich vorgegebenen Grenzwert liegt, so kann über die Steuerung die Ausgabe eines optischen oder akkustischen Warnsignales oder ein Eingriff in die Regelung des Verbrennungsprozesses erfolgen.
Ist aber eine Rußmenge am Formkörper errechnet worden, die beispielsweise unter einem vorgegebenen Grenzwert liegt, so wird von der Steuerung keine Aktion gestartet, sondern der errechnete Wert für die Rußmenge gespeichert. Eine nachfolgend gestartete, in einem bestimmten Abstand von dieser ersten Bestimmung der Rußmenge am Formkörper wiederholte zweite Bestimmung der Rußmenge am Formkörper muß nun im Zusammenhang mit der ersten Bestimmung beziehungsweise dem zu diesem Zweck gespeicherten Wert behandelt werden. Die aus der zweiten Bestimmung errechnete Rußmenge muß über die Steuerung zu dem gespeicherten Wert addiert werden, da in diesem Fall nur die Summe der beiden Werte im Korrelations-Schema den richtigen Wert liefert. Ist der Grenzwert auch nach der zweiten Bestimmung noch nicht überschritten, so muß die Summe aus beiden Bestimmungen gespeichert und für nachfolgende Berechnungen gemäß obigem Schema weiterverwendet werden.

Folgende fünf Figuren sollen die Erfindung beispielhaft erläutern. Es sei ausdrücklich hinzugefügt, daß nicht nur ein planarer Aufbau des Rußsensors, wie er hier gezeigt wird, möglich ist. Auch die Anordnung des Formkörpers auf einem Stab oder einem Rohr oder die Verwendung eines massiven, selbsttragenden Formkörpers ist möglich.
- Fig. 1: Einfacher Rußsensor auf einem Träger
- Fig. 2: Rußsensor mit einem Heizelement in einem rußfreien Gasraum
- Fig. 3: Rußsensor mit einem zusätzlichen Temperaturfühler in einem rußfreien Gasraum
- Fig. 4: Rußsensor mit einem zusätzlichen Temperaturfühler und einem zusätzlichen Heizelement im Abgasstrom sowie einem zusätzlichen Temperaturfühler in einem rußfreien Gasraum
- Fig. 5: Diagramm zur Messung des Temperaturverlaufes des Formkörpers mit und ohne Ruß

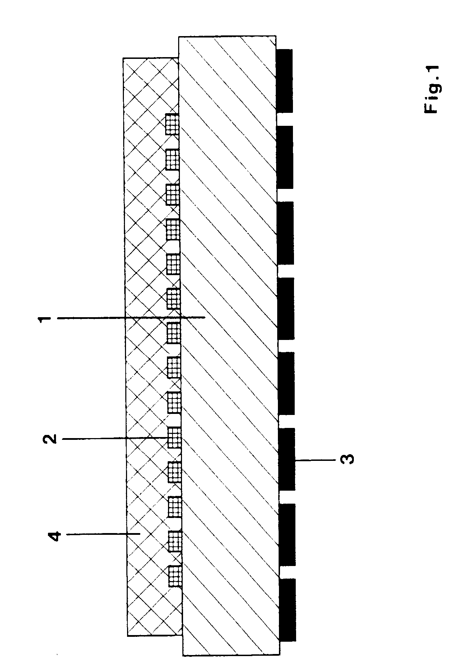

Fig. 1 zeigt einen Rußsensor im Querschnitt mit einen Träger 1 aus Al₂O₃-Keramik. Auf einer Seite des Trägers 1 ist ein mäanderförmiger Temperaturfühler 2, hier ein Platin-Widerstandselement in Dünnfilmtechnik, angeordnet. Dieser Temperaturfühler 2 ist von einem offen-porösen keramischen Formkörper 4 aus Al₂O₃ überdeckt. Auf der anderen Seite des Trägers 1 ist ein mäanderförmiges Heizelement 3 angeordnet.

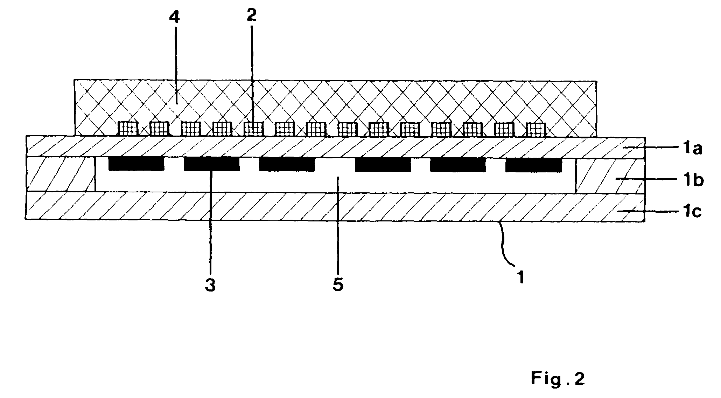

Fig. 2 zeigt einen Rußsensor im Querschnitt mit einem Träger 1, welcher in Laminattechnik aus den gasdichten, keramischen Folien 1a; 1b; 1c hergestellt ist. Auf einer Seite des Trägers 1 ist ein mäanderförmiger Temperaturfühler 2, überdeckt von einem einem offen-porösen keramischen Formkörper 4, angeordnet. Der Träger 1 bildet einen rußfreien Gasraum 5, in welchem ein mäanderförmiges Heizelement 3 geschützt angeordnet ist.

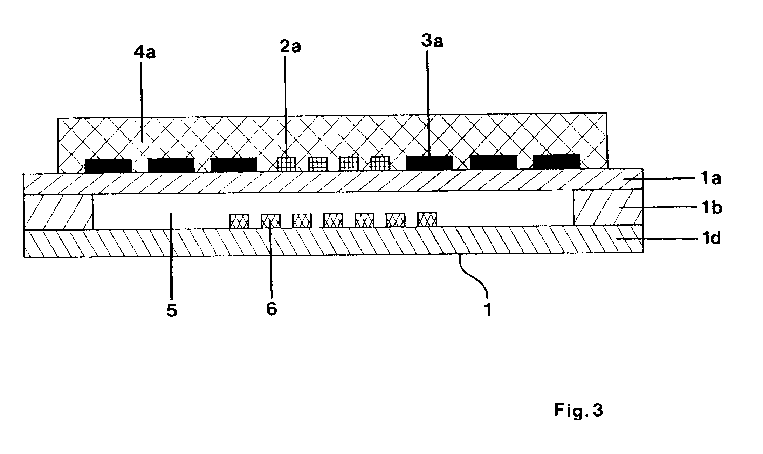

Fig. 3 zeigt einen Rußsensor im Querschnitt mit einem Träger 1 aus Al₂O₃, welcher in Laminattechnik aus den gasdichten, keramischen Folien 1a; 1b und der gasdurchlässigen, keramischen Folie 1d hergestellt ist. Auf einer Seite des Trägers 1 ist ein mäanderförmiger Temperaturfühler 2a, umgeben von einem mäanderförmigen Heizelement 3a, angeordnet. Überdeckt werden die einzelnen Bahnen des Temperaturfühlers 2a und des Heizelementes 3a von einer hier nicht dargestellten, elektrisch isolierenden, Ruß-dichten dünnen Schicht aus Al₂O₃, welche widerum von dem offen-porösen keramischen Formkörper 4a bedeckt ist. Die Porenoberflächen des Formkörpers 4a sind mit einem katalytisch aktiven Material, hier Platin, belegt. Der Träger 1 bildet einen rußfreien Gasraum 5, in welchem ein zusätzlicher Temperaturfühler 6 zur unabhängigen Messung der Abgastemperatur angeordnet ist. Die gasdurchlässige, keramische Folie 1d ermöglicht einen Zutritt des Abgases ohne Ruß-Partikel in den Gasraum 5 und trägt damit zur Erhöhung der Ansprechgeschwindigkeit des zusätzliches Temperaturfühlers 6 bei.

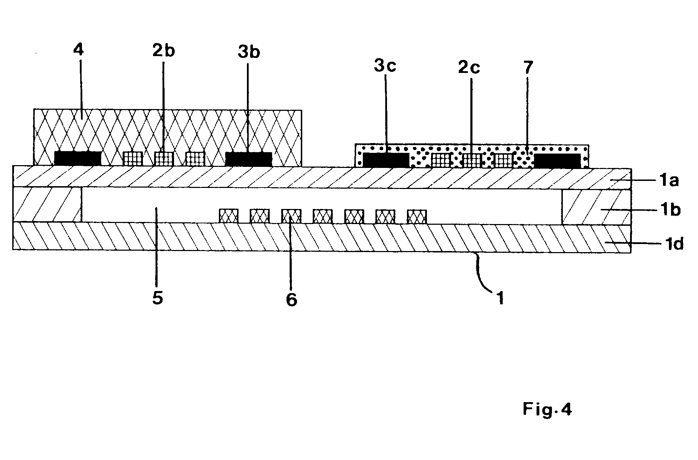

Fig. 4 zeigt einen Rußsensor im Querschnitt mit einem Träger 1, welcher in Laminattechnik aus den gasdichten, keramischen Folien 1a; 1b und der gasdurchlässigen, keramischen Folie 1d hergestellt ist. Auf einer Seite des Trägers 1 ist ein mäanderförmiger Temperaturfühler 2b, umgeben von einem ringförmigen Heizelement 3b, angeordnet. Überdeckt werden der Temperaturfühler 2b und das Heizelement 3b von einem offen-porösen keramischen Formkörper 4. Auf dieser Seite des Trägers 1 ist ein weiterer mäanderförmiger Temperaturfühler 2c, umgeben von einem ringförmigen Heizelement 3c, angeordnet. Der Temperaturfühler 2c und Heizelement 3c sind mit einer Ruß-dichten Schutzschicht 7 belegt. Der parallele Betrieb der Temperaturfühler 2b ;2c und der Heizelemente 3b ; 3c ermöglicht eine Differenz-Messung. Dabei werden über eine Steuerung die Heizelemente 3b und 3c in gleicher Weise betrieben und bei Erreichen der Zündtemperatur des Rußes das gemessene Signal des Temperaturfühlers 2c von dem des Temperaturfühlers 2b subtrahiert. Es resultiert ein Meßergebnis, das eindeutig und mit hoher Genauigkeit der Wärmeentwicklung zugeordnet werden kann, die aufgrund der Verbrennung des Rußes entsteht. Der Träger 1 bildet einen rußfreien Gasraum 5, in welchem ein zusätzlicher Temperaturfühler zur unabhängigen Messung der Abgastemperatur angeordnet ist. Die gasdurchlässige, keramische Folie 1d ermöglicht einen Zutritt des Abgases ohne Ruß-Partikel in den Gasraum 5 und trägt damit zur Erhöhung der Ansprechgeschwindigkeit des zusätzliches Temperaturfühlers 6 bei.

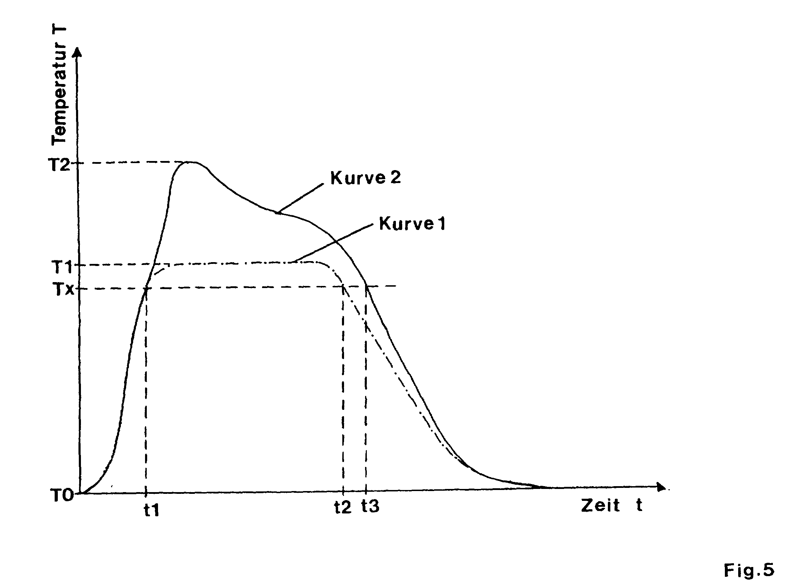

Fig. 5 zeigt den Temperaturverlauf eines Formkörpers, wie ihn Fig. 1 zeigt, der mit einem Heizelement ausgehend von einer Temperatur T0 in der Abgasführung eines Diesel-Kraftfahrzeuges erhitzt wird. Diese Temperatur T0 kann generell gleichbedeutend sein mit der Kaltstart-Temperatur des Motors oder mit einer beliebigen Temperatur des Abgasstromes. Hier wird der Fall betrachtet, daß der Formkörper während des Vorglüh-Vorganges beim Kaltstart des Kraftfahrzeuges auf die Zündtemperatur des Rußes erhitzt wird. Eine rasche Änderung der Umgebungstemperatur, welche die Messung beeinflussen würde und daher registriert und kompensiert werden müßte, ist zu diesem Zeitpunkt ( also vor Start des Motors ) nicht zu befürchten. Somit ist eine zusätzliche Messung der Umgebungstemperatur in diesem Fall nicht erforderlich. Kurve 1 zeigt den mit einem Temperaturfühler aufgenommenen Temperaturverlauf des Formkörpers ohne Rußbelag, wobei die Heizleistung des Heizelementes über eine Zeit t konstant gehalten wird. Diese Kurve 1 stellt eine Referenzkurve dar, die immer in der Steuerung des Kraftfahrzeuges für die Auswertung der Kurven mit Ruß hinterlegt werden sollte. Kurve 2 zeigt den mit dem gleichen Temperaturfühler aufgenommenen Temperaturverlauf des Formkörpers mit Rußbelag, wobei die Heizleistung des Heizelementes über eine Zeit t konstant gehalten wird. Aufgrund der Verbrennung des Rußes werden in Kurve 2 höhere Temperaturen erreicht als in Kurve 1. Die Differenz zwischen den Maximaltemperaturen T1 und T2 der Kurven 1 und 2 kann zur Berechnung der Rußmenge am Formkörper verwendet und dieser Wert über ein in der Steuerung hinterlegtes Korrelations-Schema, welches vorab speziell für den verwendeten Meßaufbau und die verwendeten Materialien des Rußfilters und des Rußsensors ermittelt wurde, mit der auf einem nachgeschalteten Rußfilter befindlichen Rußmenge in Zusammenhang gebracht werden. Selbstverständlich ist für einen Durchschnittsfachmann aber eine solche mathematische Auswertung der Kurven auch über ihre Steigung, eine Integralbildung oder über eine zeitliche Auswertung in bekannter Weise möglich. So kann beispielsweise für Kurve 1 eine Zeit t2 - t1 bestimmt werden und für Kurve 2 eine Zeit t3 - t1 bestimmt werden, die anzeigt, wie lange der Rußsensor eine Temperatur T oberhalb einer Temperatur Tx aufweist. Wird eine Temperatur Tx etwas unterhalb T1 gewählt, so zeigen sich die Unterschiede zwischen der Zeit t2 -t1 und der Zeit t3 - t1 am deutlichsten. Eine Differenz zwischen den Zeiten (t2 - t1) und (t3 - t1), welche eine aufgrund der Verbrennung von Ruß am Rußsensor, dargestellt in Kurve 2, spätere Abkühlung anzeigt, kann mit der verbrannten Menge an Ruß korreliert werden, indem ein Wert t2 - t1 für eine Temperatur Tx eines unbelegten Sensors zu Vergleichszwecken in einer Steuerung hinterlegt wird und bei einer Temperatur Tx am Rußsensor die Zeit t3 - t1 bestimmt wird und die Differenz mit Hilfe des hinterlegten Wertes gebildet wird.

## Patentansprüche

1. Sensor zum Einsatz in strömenden, Ruß-Partikel mitführenden Gasen, dadurch gekennzeichnet, daß der Sensor ein Rußsensor ist, der mindestens einen, mindestens in Strömungsrichtung offen-porösen Formkörper ( 4 ), mindestens ein elektrisches Heizelement ( 3; 3a; 3b; 3c ) und mindestens einen Temperaturfühler ( 2; 2a; 2b; 2c ) aufweist.

2. Sensor nach Anspruch 1, dadurch gekennzeichnet, daß der mindestens in Strömungsrichtung offen-poröse Formkörper ( 4 ) aus einer Keramik mit wabenförmigem Aufbau gebildet ist.

3. Sensor nach mindestens einem der Ansprüche 1 bis 2, dadurch gekennzeichnet, daß der Formkörper ( 4 ) mindestens teilweise mit einem katalytisch aktiven Material belegt ist.

4. Sensor nach mindestens einem der Ansprüche 1 bis 3, dadurch gekennzeichnet, daß das elektrische Heizelement ( 3; 3a; 3b; 3c ) und der Temperaturfühler ( 2; 2a; 2b; 2c ) direkt auf oder in dem Formkörper ( 4 ) angeordnet sind.

5. Sensor nach mindestens einem der Ansprüche 1 bis 4, dadurch gekennzeichnet, daß das elektrische Heizelement ( 3: 3a; 3b; 3c ), der Temperaturfühler ( 2; 2a; 2b; 2c ) und der Formkörper ( 4 ) auf einem Träger ( 1; 1a; 1b; 1c; 1d ) angeordnet sind.

6. Verwendung des Sensors nach mindestens einem der Ansprüche 1 bis 5 zur Ermittlung einer Ruß-Konzentration in strömenden, Ruß-Partikel mitführenden Gasen.

7. Verfahren zur Ermittlung einer Ruß-Konzentration in strömenden, Ruß-Partikel mitführenden Gasen, wobei mindestens ein Teilstrom eines Ruß-Partikel mitführenden Abgasstromes mindestens einen, mindestens in Strömungsrichtung offen-porösen Formkörper durchströmt und wobei die Temperatur des Formkörpers mit mindestens einem Temperaturfühler gemessen wird, dadurch gekennzeichnet, daß ein Teil der Ruß-Partikel am Formkörper ( 4 ) haften bleibt und daß in definierten zeitlichen Abständen der Formkörper ( 4 ) mittels eines elektrischen Heizelementes ( 3; 3a; 3b ) auf die Zündtemperatur des Rußes aufgeheizt wird und daß eine bei Verbrennung von Ruß-Partikeln auftretende Wärmeentwicklung als ein direktes Maß für eine Menge an Ruß verwendet wird, die am Rußsensor vorbeigeströmt ist.

8. Verfahren nach Anspruch 7, dadurch gekennzeichnet, daß die zeitlichen Abstände fest gewählt werden.

9. Verfahren nach Anspruch 7, dadurch gekennzeichnet, daß die zeitlichen Abstände aufgrund einer Auswertung von Betriebsdaten gewählt werden.

10. Verfahren nach einem der Ansprüche 7 bis 9, dadurch gekennzeichnet, daß nach Erreichen der Zündtemperatur des Rußes am Formkörper ( 4) das elektrische Heizelement ( 3; 3a; 3b ) mit einer gleichbleibenden Heizleistung betrieben wird, daß die durch die Verbrennung von Ruß-Partikeln auftretende Wärmeentwicklung mit dem Temperaturfühler ( 2; 2a; 2b ) gemessen wird, daß der Temperaturanstieg als direktes Maß für die verbrannte Menge an Ruß-Partikeln am Formkörper ( 4) ausgewertet wird und daß daraus die Menge an Ruß bestimmt wird, die am Rußsensor vorbeigeströmt ist.

11. Verfahren nach einem der Ansprüche 7 bis 9, dadurch gekennzeichnet, daß nach Erreichen der Zündtemperatur des Rußes am Formkörper ( 4 ) die Temperatur des Formkörpers ( 4 ) mittels Zurücknahme der Heizleistung des elektrischen Heizelementes ( 3; 3a; 3b ) weitgehend isotherm gehalten wird und die Heizleistung als direktes Maß für die verbrannte Menge an Ruß-Partikeln am Formkörper ( 4 ) ausgewertet wird und daß daraus die Menge an Ruß bestimmt wird, die am Rußsensor vorbeigeströmt ist.
